(19) **Europäisches Patentamt / European Patent Office / Office européen des brevets**

(11) **EP 4 477 778 B1**

(12) **EUROPEAN PATENT SPECIFICATION**

(45) Date of publication and mention of the grant of the patent:
**24.06.2026 Bulletin 2026/26**

(21) Application number: **22962884.7**

(22) Date of filing: **15.12.2022**

(51) International Patent Classification (IPC):
**B29C 37/00** *(2006.01)*   **C23C 26/02** *(2006.01)*
**B32B 7/02** *(2019.01)*   **B32B 15/08** *(2006.01)*

(52) Cooperative Patent Classification (CPC):
**B29C 37/0082;** C23C 26/02

(86) International application number:
**PCT/RU2022/000373**

(87) International publication number:
**WO 2024/085782 (25.04.2024 Gazette 2024/17)**

(54) **METHOD FOR PRODUCING A STRUCTURAL COMPOSITE STRUCTURE WITH A POLYMERIC SURFACE**

VERFAHREN ZUR HERSTELLUNG EINER STRUKTURVERBUNDSTRUKTUR MIT EINER POLYMEROBERFLÄCHE

PROCÉDÉ DE PRODUCTION DE STRUCTURE DE CONSTRUCTION COMPOSITE AVEC UNE SURFACE POLYMÈRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.10.2022 RU 2022127110**

(43) Date of publication of application:
**18.12.2024 Bulletin 2024/51**

(73) Proprietor: **Ovcharenko, Nikolay Yurievich**
**10117 Berlin (DE)**

(72) Inventor: **Ovcharenko, Nikolay Yurievich**
**10117 Berlin (DE)**

(74) Representative: **Werner, André**
**Kaufmann**
**Patent- und Markenanwälte**
**Loschwitzer Straße 42**
**01309 Dresden (DE)**

(56) References cited:
**EP-A1- 3 943 278      EP-A2- 0 962 674**
**FR-B1- 2 112 375      RU-C1- 2 758 702**
**RU-C1- 2 759 274      RU-C2- 2 258 859**
**US-A1- 2019 001 441   US-A1- 2021 283 860**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a technology for the production of machine components using polymer composite materials as a lining for the rubbing surfaces of machine parts, particular in plain bearings.

Currently, the main element of such machine parts as plain bearings are structural parts with an antifriction coating, including liners made of antifriction material, located between the shaft and the bearing housing itself.

Modern materials used for sliding surfaces in friction units of machine parts must provide a low friction, conformability, thermal conductivity, compatibility, high compressive strength, fatigue strength, wear rate, corrosion resistance. The currently widely used specialized antifriction composite materials based on high-molecular polymer matrixes have high parameters, but their widespread use is hampered by low thermal conductivity, which affects the heat removal from the friction zone of the bearing, thermal expansion, which affects the dimensions of products during the changing of thermal conditions, strength of joined elements and ease of technological application.

At the current time, there are no universal antifriction materials that would objectively have high parameters of all the above properties. In this regard, the most promising direction for the development of technologies for the production of friction units of mechanisms is the use of composite antifriction materials and the improvement of produced units made from dissimilar materials that combine complex properties of the materials used.

As a known published technical solution, it is advisable to note the fusion bonding of polymer and metal surfaces to produce a combined structural material (see DE 11 2021 006 205 T5).

The known technical solution disclosed in DE 11 2021 006 205 T5 relates to the field of manufacturing combined structural materials consisting of metals and polymers.

The technical solution disclosed in DE 11 2021 006 205 T5 consists in a method for producing a combined metal-polymer structural material.

The essence of the technology disclosed in DE 11 2021 006 205 T5 is the formation of an integrated combined layer on the surface of the substrate. The component located on the surface of the substrate is selected based on its ability to absorb heating. The surfaces of the component and the substrate are mechanically joined, creating an area of mutual penetration of materials at the boundary of the joined surfaces.

The technological aspect of the solution disclosed in DE 11 2021 006 205 T5 is the use of a polymer component, the placement of a metal element in it at a given depth for creation of a heating under electromagnetic field, the adhesion of the surfaces of the polymer component and the metal substrate by pressing and placing them in an electromagnetic field, creation of a heating zone at the boundary of the joined surfaces to a temperature sufficient to melt the polymer component of the combined layer and its adhesion to the surface of the metal substrate.

The solution disclosed in DE 11 2021 006 205 T5 makes it possible to combine polymer and metal substrate into a combined product, which eliminates thermal deformations and stresses, and also preserves the geometric stability of the resulting product. The solution disclosed in DE 11 2021 006 205 T5 is the basis for creating combined structural materials with wide potential for industrial use and high technical performance and operational indicators.

Combined units obtained according to DE 11 2021 006 205 T5 are successful for industrial use, since their innovative production provides conditions for reducing operating costs and, at the same time, increasing the level of manufacturability and competitiveness of the resulting products. However, these units are subject to constant growing consumer expectations and will require periodic modernization via the reconfiguring of equipment and making significant adjustments to the technology.

It should also be taken into account that the technological improvement of the physical and mechanical parameters of the bearing antifriction layers, due to the specificity and narrow focus of the technical field, will require the involvement of significant amounts of material and intellectual resources, which will likely be perceived as a significant limiting factor in improving the known technology disclosed in DE 11 2021 006 205 T5 of fusion bonding of polymer and metal surfaces.

A method for producing a multifunctional composite coating (see RU 2 759 274 C1) should be considered as the closest technically to the claimed invention

The known method for producing a coating disclosed in RU 2 759 274 C1 relates to the field of mechanical engineering, and more precisely, to the field of producing antifriction layers used in plain bearings, bushings and other metal products and interfaces to reduce friction and wear of the work surfaces of machine components.

In accordance with the known solution disclosed in RU 2 759 274 C1, the method for producing a protective composite coating is characterized by the fact that the surface of a metal substrate is preliminary prepared by mechanical processing, a thermal diffusion layer with open porosity is formed, and an outer layer of an antifriction non-metallic composite is applied.

It is important that, according to the solution disclosed in RU 2 759 274 C1, mechanical processing involves the use of a cutting tool and the formation of a regular wavy relief and roughness within tolerance, the porosity of the thermal diffusion zinc layer is selected to 10%, and the antifriction non-metallic composite is obtained by mixing a binder based on a polymer dispersion, thinner and fine particles of polytetrafluoroethylene up to 5 $\mu$m in size.

As a result of the known solution disclosed in RU 2 759 274 C1, the strength of the coating layers increases, the service life increases, and the service cost of friction units decreases, which solves the problem of creating a method for producing durable composite coatings based on metal and polymer materials with high technical and operational parameters.

Based on the features of the known solution disclosed in RU 2 759 274 C1, the metal substrate used undergo a preliminary preparation procedure, which consists in the formation of a wavy relief of a certain shape and the necessary parameters, which is ensured by turning or milling with a mechanical cutting tool with adjusted settings to obtain the expected result.

At the same time, the described preparation procedure for accuracy of implementation must be carried out "manually", i.e., under the direct control of a specialist or technologist who processes each substrate individually and subsequently sends it to the next technological stages.

However, it is important to note that the "manual" high quality of preparation of the surface relief allows producing only small amounts of products, with the practical impossibility of organizing a large-scale competitive serial production meeting the needs of large industrial enterprises.

Also, as a significant systemic disadvantage of the technology known from RU 2 759 274 C1 should be noted the need to recruit significant labor and energy costs for production, the use of many technological cycles, including "manual" ones, which together are not able to cover the costs of manufacturing individual units of products. It is not economically effective and can be justified and work only in cases of local or one-time use for production necessity.

The limitations of the technology disclosed in RU 2 759 274 C1 are also associated with the impossibility of its use for other polymer composites, for which it is impossible to mix a binder based on a polymer dispersion, a diluent and fine particles of polytetrafluoroethylene due to high processing and operating temperatures.

From EP 3 943 278 A1, a joining method for metallic components is known in which protrusions on a joining surface are designed to meet specific geometric requirements. In particular, a number of the protrusions satisfy the condition that the maximum width of the protrusions at the height of a reference surface is smaller than the maximum width of the protrusions in a direction parallel to the reference surface.

This configuration enables an improved connection between the metal member and the joining partner.

US 2021/283860 A1 describes a hybrid composite material which comprises a first joining partner having a metal surface and a second joining partner with a polymeric material surface. The associated manufacturing process provides that the metal surface is equipped with microstructured depressions of micrometre-scale diameter and depth.

US 2019/001441 A1 discloses methods for producing plastic-metal junctions by means of laser-assisted joining. In these methods, a metal surface is treated with a laser at a non-zero angle of incidence in order to generate surface features such as pores or grooves. Subsequently, the structured metal surface is brought into contact with a flowable resin composition, which is then cured to form a solid plastic. In this way, a durable junction between the metal form and the plastic component is obtained.

The technical problem of the proposed invention is the creation of a simple technology for combining polymer and metal-containing materials with a wide structural field of application and high technical and operational parameters.

The technical result of the proposed invention is the implementation of a non-standard and at the same time technological method of joining dissimilar materials, which is characterized by a simplified production cycle, implying a single stage of adhesion of dissimilar layers. The method provides an increase in the accuracy and strength of the bonding, as well as resistance to mechanical, chemical and temperature influence. As a result, a combined and destruction-resistant unit is formed, where one of the surfaces consists of a polymer (in particular antifriction) composite material.

The specified technical result is achieved and the designated technical problem is solved as a result of the fact that the method of bonding a polymer material and a metal-containing substrate to obtain a combined unit is characterized (a) by preliminary local preparation of the metal-containing substrate, which consists in the formation on the contact surface of a set of relief asperities orderly distributed with a surface density from 50 to 1000 pcs/mm$^2$ and having shaped contours of protuberances and recesses with a cross-sectional size from 20 to 100 $\mu$m and with the orientation of the walls of most of the mentioned protuberances and recesses at an angle of 45-90° to the specified contact surface, (b) followed by control and diagnostic measurements of the geometric parameters of the specified set of relief asperities, (c) onto which a polymer material is applied in a partially molten state with a thickness of at least 10 $\mu$m, the joined area of which penetrates inside the relief asperities, externally covering them and, due to fluidity, occupies and envelops the free volumes of prepared protuberances and recesses, (d) which ensures heat dissipation from the joint and reduces the amount of thermal expansion of the produced unit, and, in the case of external mechanical force, ensures the emergence of counterforces preventing the separation or displacement of the bonded parts.

It is the best embodiment of the invention if the preparation of the metal-containing substrate is carried out mechanically, namely, it may include drilling or cutting (milling) or electrochemical or electrical discharge machining or electric arc or plasma or electron beam welding etc.

According to the invention, the protuberances and recesses are made in the form of craters with their edges rising above the contact surface and with passages made deep into their central parts.

According to the invention, the existing protuberances and/or recesses of a set of relief asperities are formed on the contact surface in an orderly manner in the form of successive rows, the distance between which exceeds the cross-sectional size of the largest protuberance and recess of the metal-containing substrate by no more than 1.5 times.

According to one of the possible embodiments of the invention, prepregs or inert fillers are applied to the recesses of the relief asperities of the substrate before bonding with the polymer material to minimize the volume of air cavities.

In accordance with the proposed inventive concept, a new technological method of combining a polymer material and a metal-containing substrate is proposed for patenting to obtain a combined component of mechanisms, in particular, as parts of plain bearings, resulting in a combined metal-polymer joint that has high thermal conductivity, tensile/compressive/shear strength, low thermal expansion.

The main feature of the proposed technical solution is the technological simplicity, which involves a single operation of bonding dissimilar layers to each other. This joint occurs without the use of complex operations to ensure adhesion, for example, the often-used intermediate layers and additional processing with multiple cyclic repetition. The proposed solution provides a significant simplification of the technological process and leads to a reduction in production time, since there is no need to use specialized equipment and personnel, prepare technological requirements and train personnel. In addition, the absence of an intermediate layer at the adhesion area eliminates the long cycle of surface preparation and allows the use of the resulting combined units in chemically active environments without the risk of destruction of the material and reducing the strength of the joint as such.

The presented technological feature uses a single operation and provides the joining a polymer material and a prepared metal-containing substrate, which undergoes preliminary preparation by mechanical means without applying intermediate layers. The preparation is characterized by the formation on the surface of the future contact of a set of relief asperities in the form of chaotically or orderly distributed protuberances and recesses with a surface density of 50 to 1000 pcs/mm$^2$, with a cross-sectional size of 20 to 100 $\mu$m, with the orientation of their walls at an angle of 45-90° to the contact surface. This allows applying a polymer material that penetrates into the relief asperities, covering them and, due to the molten state, occupies and envelops the free volumes of protuberances and recesses. As a result, the emergence of counteraction forces prevents the separation or displacement of the bonded parts in the case of an external force or mechanical impact.

In accordance with the author's concept, the applied polymer material should cover in height the entire volume of relief asperities of the metal-containing pre-treated substrate and have a thickness of at least 10 $\mu$m.

The intensive heat dissipation from the joint area of dissimilar materials is achieved, which ensures a low temperature gradient up to several degrees Celsius between the polymer surface and the metal-containing substrate, if there are a total thickness of the polymer material of 10-500 $\mu$m and ordinary thermal operating conditions of the assembled unit, for example, as a structural element of a plain bearing.

It should also be noted that, when using a total polymer layer thickness of 10-500 $\mu$m under ordinary thermal operating conditions of mechanisms from - 50 °C to + 150 °C, thermal expansion of the entire combined unit is less than 10 $\mu$m, which, in particular, provides thermal expansion less than the tolerance for the plain bearing most sizes.

The proposed bonding of dissimilar materials in accordance with the invention ensures high strength of the bonding and creates a combined unit with a high level of strength in the normal and tangential direction in relation to the joint area, which has stable physical and chemical properties when exposed to temperature and/or chemically active environments. The strength of the combined unit is directly affected only by the specific strength of the material used and not by the conditions for adhesion of materials themselves.

The use of technologically simple methods of mechanical preparation of the substrate surface and thermal methods of joining materials with different melting temperatures leads to a significant reduction in the cost of manufacturing of finished products due to a reduction or elimination of the use of consumables, as well as due to a reduction in the number of production cycles. This, in turn, significantly increases the industrial potential of the presented technology and creates preferable economic conditions for full-scale serial production of the product.

It should be additionally noted that the use of a total polymer layer thickness in the range of 10-500 $\mu$m is capable to compensate the lower thermal conductivity and higher coefficient of thermal expansion of the polymers and ensure sufficient heat dissipation from the joint area and minimize the thermal expansion of the entire combined unit when used as parts of plain bearings.

The surface of the metal-containing substrate prepared in this way does not require additional treatment to increase adhesion by other methods, such as chemical or application of intermediate layers.

Thus, the proposed process for obtaining combined components of mechanisms with a polymer (in particular, antifriction) surface forms a set of necessary features sufficient to achieve a non-standard and technological method of joining dissimilar materials, which is characterized by a simplified production cycle, implying a single stage of adhesion of dissimilar layers, during which an increase in the accuracy and strength of the joint is observed, as well as its resistance to mechanical, chemical and temperature influence. As a result, a combined and destruction-resistant unit with a polymer (in particular, antifriction) surface is formed. The new non-standard technology for joining a polymer and a metal is created, which solves the existing technical problem and has a wide area of application and high production and technical and economic potential.

Fig. 1a, 1b, 1c show the prepared contact surface of the metal-containing substrate;
Fig. 2, 3a and 3b show options for the location of distinct protuberances and recesses relative to the contact surface;
Fig. 4a and 4b show particular versions of the prepared contact surface with an example of coating and enveloping relief asperities located at approximately an angle of 90° to the specified surface;
Fig. 5a and 5b show specific variants of the prepared contact surface with an example of coating and enveloping relief asperities located at approximately an angle of 50°-80° to the said surface;
Fig. 6 shows the notation diagram for the thermophysical calculation of a layer of polymer material;
Fig. 7 shows a diagram for measuring the magnitude of forces to break a joint section;
Fig. 8 shows a variant of adhesion of materials with a mechanically pre-treated substrate surface.

The proposed method for bonding a layer of polymer material and a metal-containing substrate is explained by a specific example of implementation, which, however, is not the only possible one, but clearly demonstrates the accomplishment of the specified set of essential features of the specified technical result, as well as the solution of the existing technical problem.

It should be noted that the purpose of the subsequent description of the proposed invention is not to limit it to a specific embodiment, but, on the contrary, to cover all possible additions that do not go beyond the scope of the presented claims.

The proposed method of bonding a layer of polymer material and a metal-containing substrate to obtain a combined component for mechanisms can be implemented as follows.

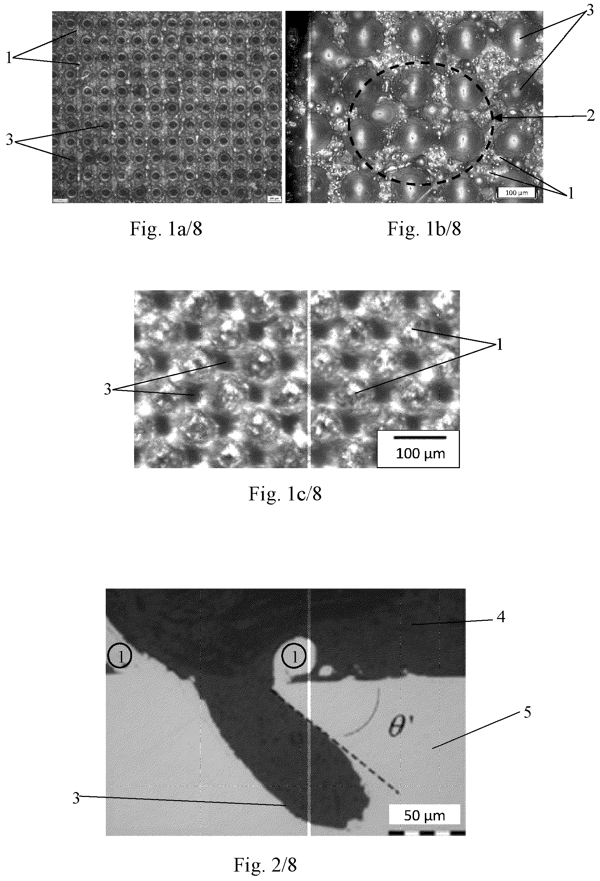

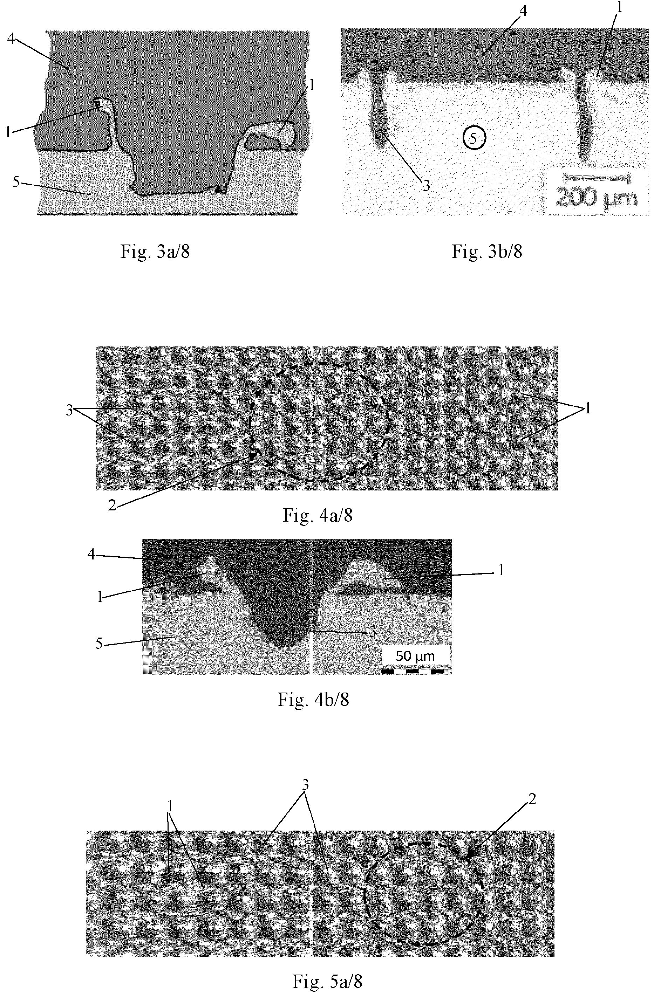

The presented Figs. 1-5a, 5b, and Fig. 8 show the elements and parts that are used in implementing the proposed technology for joining a layer of polymer material and a metal-containing substrate, namely:

1 - protuberances;
2 - area of relief asperities;
3 - recesses;
4 - polymer material;
5 - metal-containing material (substrate);
6 - joint area;
$\Theta$ is the angle of the walls of the recesses relative to the surface of the relief asperities.

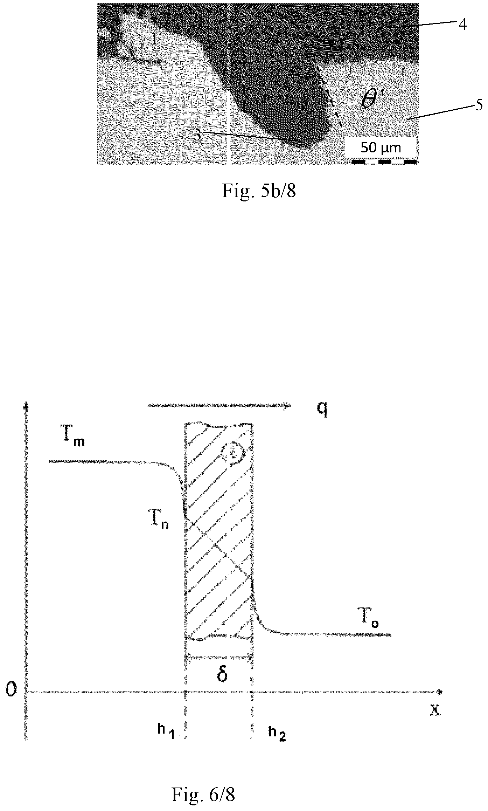

Fig. 6 shows the following designations for thermophysical calculations for a combined unit, namely:

$T_o$ is the temperature of the metal-containing material;
$T_m$ is the temperature of the external environment (in the case of a plain bearing - the temperature of the lubricant (oil, pumped medium);
$T_n$ is the temperature of the outer surface of the polymer material (in the case of a plain bearing - the layer of the bearing material);
$h_1$ is the heat transfer coefficient at the boundary "external environment/polymer material";
$h_2$ is the heat transfer coefficient at the boundary "polymer material/metal-containing material";
$\lambda$ is the thermal conductivity coefficient of the polymer material;
$\delta$ is the thickness of the polymer material;
q is the heat flux density.

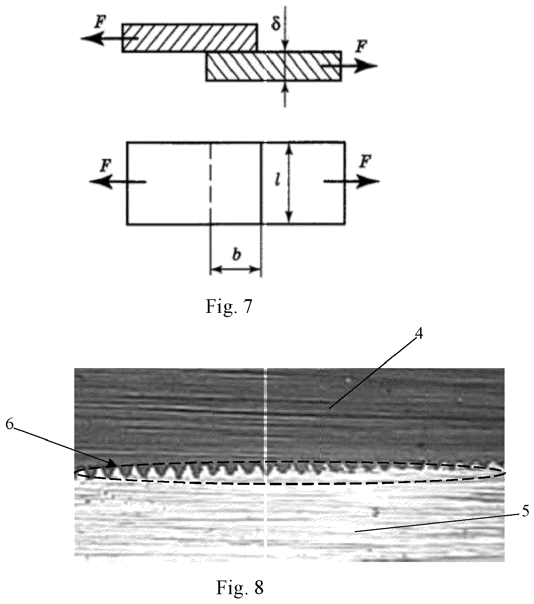

The following designations of the parameters for measuring shear forces are indicated in Fig. 7, namely:

F is the magnitude of the shear force;
b is the length of the area of conjugation of materials;
l is the width of the area of conjugation of materials;
$\delta$ is the thickness of the polymer material.

The production of a combined unit, according to the proposed invention, begins with the preparation of a less fluid material, namely, a metal-containing substrate (metal-containing material 5), onto which a more fluid layer is applied, i.e., polymer material 4.

The metal-containing material 5 is prepared by mechanical processing using drilling or cutting (milling) or electrochemical or electrical discharge machining or electric arc or plasma or electron beam welding etc., until relief asperities are formed on the surface being processed with shaped contours of protuberances 1 and recesses 3, which are randomly or orderly distributed.

The said preparation is mainly carried out locally and, as a rule, is characterized by the arrangement of the said protuberances 1 and recesses 3 at an angle of 45-90° to the contact surface of the metal-containing substrate 5, which will subsequently ensure strong reliable adhesion with the fused polymer material 4, which penetrates into the set of relief asperities (see section of relief asperities 2), externally covers the asperities and, due to high fluidity, occupies and envelops the free volumes of the prepared protuberances 1 and recesses 3.

The obtained and prepared after processing surface with relief asperities (see relief asperity section 2) is subjected to control and diagnostic measurement of the geometric parameters of the obtained set of relief asperities (see relief asperity section 2) by contact and/or non-contact methods. Depending on the technical requirements, an operation can be carried out to minimize the volume of air cavities by applying prepregs or other inert fillers into the recesses of the relief asperities.

After preparing of the relief asperities of the metal-containing material 5, the polymer material 4 is bonded to the resulting set of relief asperities (see section of relief asperities 2). As a result, polymer material 4 in a partially molten state is applied with hot pressing or spraying, the joined section of which penetrates into the set of relief asperities (see section of relief asperities 2), completely covers the asperities externally and, due to plasticity, occupies and envelops all free volumes of protuberances 1 and recesses 3 with their passages, providing a reliable and durable joint area.

The application of polymer material 4 to the set of relief asperities (see section of relief asperities 2) of metal-containing material 5 is performed with a thickness of at least 10 $\mu$m, which is necessary for complete coverage of the area of the set of relief asperities that have the form of chaotically or orderly distributed protuberances 1 and recesses 3. Wherein said protuberances 1 and recesses 3 can be of various shapes and configurations, have, as a rule, a complex structure and shaped contours with multiple passages, pores and microcracks and multi-level differences in height.

If the thickness of the polymer material 4 is decreased within 10-500 $\mu$m, ensures complete coverage of the relief asperities (see the section of relief asperities 2), the temperature gradient between the outer surface of the polymer material 4 and the heat-conducting metal-containing material 5 can be reduced to values of several degrees.

The table 1 below presents a comparison of theoretically calculated temperature gradients for polymer material 4 of different thicknesses with the following parameters, indicated in Fig. 6.

Table 1

| $T_o$ °C | $T_m$ °C | $\delta$ $\mu$m | Heat transfer coefficient of the layer, k, W/m$^2$ °K | Heat flux density, q, kW/m$^2$ | $T_n$ °C |
|---|---|---|---|---|---|
| 50 | 150 | 10 | 995.02 | 99.50 | 51 |
| 50 | 150 | 50 | 975.61 | 97.56 | 52 |
| 50 | 150 | 100 | 952.38 | 95.24 | 55 |
| 50 | 150 | 500 | 800.00 | 80.00 | 70 |
| 50 | 150 | 1000 | 666.67 | 66.67 | 83 |
| 50 | 150 | 2000 | 500.00 | 50.00 | 100 |

The table 1 and Fig. 6 can be used as a model of heat distribution in the bearing layer of a plain bearing manufactured according to the invention.

The temperature of the metal-containing material 5 of the bearing housing $T_o$ is 50 °C, the temperature of the lubricant (oil) $T_m$ is 150 °C, the thickness of the layer of the bearing material made of polymer (polymer material 4) $\delta$ is in the range from 10 $\mu$m to 2 mm.

Heat transfer coefficient at the interface "external environment/polymer material" $h_1$ - 1000 W/(m$^2$ °K).

The large joint area of materials at the boundary "polymer material 4/metal-containing material 5" provides a significantly higher heat transfer coefficient $h_2$ than $h_1$ at the boundary "external environment/polymer material", i.e. $h_2 \gg h_1$ = 1000 W/(m$^2$ °K) and the $h_2$ can be neglected in the calculations.

The thermal conductivity coefficient of the polymer material is $\lambda$ = 2 W/(m °K).

Table 1 shows the calculated heat transfer coefficients of the lining, k, W/m$^2$ °K, heat flux density, q, kW/m$^2$ and temperature of the bearing layer $T_n$.

As a result of theoretical comparison, it was found that the calculated temperature of the bearing layer $T_n$ (when using a polymer material thickness of 10 to 500 $\mu$m) will be 30-49 °C lower than the temperature with a thickness of 2 mm, which is mainly used at present, while the value of the flux of heat (q) dissipated from the friction zone will increase by 60-100 %.

High coefficients of thermal expansion of polymer materials compared to metals lead to design disadvantages of the obtained combined units. The proposed method eliminates this disadvantage.

The same temperature as in table 1 and the average value of the coefficients of thermal expansion of polymer composite materials ($\alpha$) in the range from $10 \cdot 10^{-6}$/°C to $100 \cdot 10^{-6}$/°C were used. The increase in the geometric dimensions of the bearing layer with a temperature difference of 100 °C is indicated below in the table 2, where parameter $T_o$ is the temperature of the metal-containing material 5, parameter $T_m$ is the temperature of the lubricant (oil), parameter $\delta$ is the thickness of the bearing material layer, and $\alpha_1$, $\alpha_2$ are the minimal and maximal coefficients of thermal expansion of the commonly used polymer materials.

Table 2

| $T_o$ °C | $T_m$ °C | $\delta$ $\mu$m | Increasing the thickness of the lining under $\alpha_1 = 10 \cdot 10^{-6}$/°C $\mu$m | Increasing the thickness of the lining under $\alpha_2 = 100 \cdot 10^{-6}$/°C $\mu$m |
|---|---|---|---|---|
| 50 | 150 | 10 | 0.005 | 0.05 |
| 50 | 150 | 50 | 0.025 | 0.25 |
| 50 | 150 | 100 | 0.05 | 0.5 |
| 50 | 150 | 500 | 0.25 | 2.50 |
| 50 | 150 | 1000 | 0.5 | 5.00 |
| 50 | 150 | 2000 | 1.00 | 10.00 |

According to theoretically calculated data indicated in table 2, it has been established that the application of polymer material 4 with a thickness of 10-500 $\mu$m practically eliminates the influence of thermal expansion of materials (less 0.01 mm) and provides the enough tolerance for the plain bearing most sizes.

Due to the preferential orientation of the protuberances 1 and recesses 3 at an angle of 45-90° relative to the contact surface of the metal-containing material 5, in the case of applying a mechanical force in the direction perpendicular to the surface (separation), a vertical projection of the reaction force of the substrate acts on the polymer material 4 in the joint area 6, preventing the separation. When forces are applied in the tangential direction (shear), a projection of the reaction force of the substrate appears in the tangential direction, which prevents displacement of the bonded parts of the unit.

In this case, it has been established experimentally that preferable results are achieved with a density of protuberances 1 and recesses 3 from 50 to 1000 pcs/mm$^2$ (table 3) with a cross-sectional size from 20 to 100 $\mu$m.

The tangential value of the strength of the joint between the parts of the combined unit is defined as the ratio of the breaking force F divided by the contact area S=b*l of the section of metal-containing material 5 and polymer material 4 of thickness $\delta$ (see Fig. 7).

All other things being equal, the magnitude of the tensile force (F) of the joined materials is determined by the number and area of contact points between the materials in the tangential projection and the empirical coefficient k, characterizing the quality of adhesion at each point:

$$F = k\ \tau_b\ s,$$

where s is the total area of the contact points of the materials in the tangential projection;
$\tau_b$ is bending strength of the lining material (polymer material 4).

Table 3 provides data on the strength of the joint area 6 with different treatment options for the adhesion surfaces (a set of relief asperities) of the metal-containing material 5, measured according to ASTM D1002-10.

Table 3

| Substrate surface preparation (sample) | Strength of the sample, MPa as per ASTM D1002-10 | Strength of the joint in the contacting area, F/s, MPa | Bending strength of polymer layer $\tau_b$, MPa | Quality of adhesion k, $10^{-3}$ |
|---|---|---|---|---|
| Metallization with coppernickel alloy with grain size of 0.15-0.25 mm | $2.02 \pm 0.03$ | 2 | $92 \pm 6$ | 22 |

(continued)

| Substrate surface preparation (sample) | Strength of the sample, MPa as per ASTM D1002-10 | Strength of the joint in the contacting area, F/s, MPa | Bending strength of polymer layer $\tau_b$, MPa | Quality of adhesion k, $10^{-3}$ |
|---|---|---|---|---|
| Consecutive rows of 70 $\mu$m width at a distance of 600 $\mu$m | 3 ± 1 | 26 | 320 ± 20 | 80 |
| Consecutive rows of 70 $\mu$m width at a distance of 200 $\mu$m | 11 ± 2 | 31 | 320 ± 20 | 98 |
| Consecutive rows 50 $\mu$m wide at a distance of 500 $\mu$m | 3 ± 1 | 30 | 92 ± 6 | 326 |
| Craters Ø100 $\mu$m (Fig. 1b) randomly located with a density of 60 pcs/mm$^2$ | 25 ± 3 | 53 | 92 ± 6 | 577 |
| Craters Ø70 $\mu$m (Fig. 1a) orderly located with a density of 72 pcs/mm$^2$ | 18.0 ± 1.5 | 65 | 92 ± 6 | 706 |
| Craters Ø30 $\mu$m (Fig. 1c) orderly located with a density of 156 pcs/mm$^2$ | 20.5 ± 0.3 | 186 | 90 ± 15 | 2067 |
| Craters Ø30 $\mu$m (Fig. 1c) orderly located with a density of 156 pcs/mm$^2$ | 17.0 ± 3 | 154 | 65 ± 5 | 2373 |
| Craters Ø30 $\mu$m (Fig. 1c) orderly located with a density of 493 pcs/mm$^2$ | 62.0 ± 6 | 178 | 65 ± 5 | 2738 |

The data obtained on different samples (see table 3) using various methods of substrate surface preparation show a significant excess of the quality of adhesion k for the presented method compared to other methods known from the prior art.

The proposed technology is distinguished by the possibility of carrying out the joining of dissimilar parts in a single production cycle, which significantly simplifies the task and minimizes labour and energy costs, promoting the effective use of the method on an industrial scale in the field of mechanical engineering, ensuring the successful and efficient mass production of combined components of mechanisms with high technical and operational indicators.

**Claims**

1. A method of bonding a polymer material (4) and a metal-containing substrate (5) to produce combined components of mechanisms, which comprises: preliminary local preparation of a metal-containing substrate (5) with the formation on the contact surface of a set of relief asperities, distributed with a surface density of 50 to 1000 pcs/mm$^2$, having the shaped contours of protuberances (1) and recesses (2) with a cross-sectional size of 20 to 100 $\mu$m, with the walls of most of the mentioned protuberances (1) and recesses (2) oriented at an angle of 45-90° to the specified contact surface; application of a polymer material (4) in a partially molten state to the prepared surface with a thickness of at least 10 $\mu$m, which penetrates into the relief asperities, externally covering them and, due to fluidity, occupies and envelops the free volumes of the prepared protuberances (1) and recesses (2); the method providing heat dissipation from the joint of the produced combined unit and reduces the amount of thermal expansion of the unit, and, in the case of external mechanical force, it ensures the emergence of counterforces that prevent the separation or displacement of the bonded parts of the unit, **characterized in that** the protuberances (1) and recesses (2) are made in the form of craters with their edges rising above the contact surface and with passages made deep into their central parts, wherein the protuberances (1) and recesses (2) of a set of relief asperities are formed on the contact surface in an orderly manner in the form of successive rows, the distance between which exceeds the cross-sectional size of the largest protuberance and recess of the metal-containing substrate (5) by no more than 1.5 times, and wherein subsequent control and diagnostic measurements of the geometric parameters of the said set of relief asperities are performed after the preliminary local preparation of a metal-containing substrate (5).

**2.** The method of bonding a polymer material and a metal-containing substrate according to claim 1, **characterized in that** the preparation of the metal-containing substrate (5) is performed mechanically.

**3.** The method of bonding a polymer material and a metal-containing substrate according to claim 2, **characterized in that** the mechanical preparation involves drilling or cutting or electrochemical or electrical discharge machining or electric arc or plasma or electron beam welding.

**4.** The method of bonding a polymer material and a metal-containing substrate according to claim 1, **characterized in that** before bonding with the polymer material (4), prepregs or inert fillers are applied to the recesses (2) of the relief asperities of the substrate to minimize the volume of air cavities.


**Patentansprüche**

**1.** Verfahren zum Verbinden eines Polymermaterials (4) und eines metallhaltigen Substrats (5) zur Herstellung von kombinierten Bauteilen von Mechanismen, welches umfasst: vorherige lokale Vorbereitung eines metallhaltigen Substrats (5) unter Bildung einer Menge von Relief-Unebenheiten auf der Kontaktfläche, die mit einer Oberflächendichte von 50 bis 1000 Stk./mm$^2$ verteilt sind, welche die geformten Konturen von Vorsprüngen (1) und Vertiefungen (2) mit einer Querschnittsgröße von 20 bis 100 $\mu$m aufweisen, wobei die Wände der meisten der genannten Vorsprünge (1) und Vertiefungen (2) in einem Winkel von 45-90° zu der angegebenen Kontaktfläche ausgerichtet sind; Aufbringen eines Polymermaterials (4) in einem teilweise geschmolzenen Zustand auf die vorbereitete Oberfläche mit einer Dicke von mindestens 10 $\mu$m, welches in die Relief-Unebenheiten eindringt, diese äußerlich bedeckt und aufgrund seiner Fließfähigkeit die freien Volumina der vorbereiteten Vorsprünge (1) und Vertiefungen (2) einnimmt und umhüllt; wobei das Verfahren eine Wärmeableitung aus der Verbindungsstelle der hergestellten kombinierten Einheit bereitstellt und das Ausmaß der thermischen Ausdehnung der Einheit reduziert, und im Falle einer äußeren mechanischen Krafteinwirkung das Entstehen von Gegenkräften sicherstellt, die die Trennung oder Verschiebung der verbundenen Teile der Einheit verhindern, **dadurch gekennzeichnet, dass** die Vorsprünge (1) und Vertiefungen (2) in Form von Kratern ausgebildet sind, deren Ränder sich über die Kontaktfläche erheben und die mit bis tief in ihre zentralen Teile reichenden Durchgängen versehen sind, wobei die Vorsprünge (1) und Vertiefungen (2) einer Menge von Relief-Unebenheiten auf der Kontaktfläche in geordneter Weise in Form von aufeinanderfolgenden Reihen ausgebildet sind, deren Abstand die Querschnittsgröße des größten Vorsprungs und der größten Vertiefung des metallhaltigen Substrats (5) um nicht mehr als das 1,5-Fache überschreitet, und wobei anschließende Kontroll- und Diagnosemessungen der geometrischen Parameter der genannten Menge von Relief-Unebenheiten nach der vorherigen lokalen Vorbereitung eines metallhaltigen Substrats (5) durchgeführt werden.

**2.** Verfahren zum Verbinden eines Polymermaterials und eines metallhaltigen Substrats nach Anspruch 1, **dadurch gekennzeichnet, dass** die Vorbereitung des metallhaltigen Substrats (5) mechanisch durchgeführt wird.

**3.** Verfahren zum Verbinden eines Polymermaterials und eines metallhaltigen Substrats nach Anspruch 2, **dadurch gekennzeichnet, dass** die mechanische Vorbereitung Bohren oder Schneiden oder elektrochemische oder funkenerosive Bearbeitung oder Lichtbogen- oder Plasma- oder Elektronenstrahlschweißen umfasst.

**4.** Verfahren zum Verbinden eines Polymermaterials und eines metallhaltigen Substrats nach Anspruch 1, **dadurch gekennzeichnet, dass** vor dem Verbinden mit dem Polymermaterial (4), Prepregs oder inerte Füllstoffe in die Vertiefungen (2) der Relief-Unebenheiten des Substrats eingebracht werden, um das Volumen von Lufthohlräumen zu minimieren.


**Revendications**

**1.** Procédé de liaison d'un matériau polymère (4) et d'un substrat contenant du metal (5) pour produire des composants combinés de mécanismes, comprenant : une préparation locale préalable d'un substrat contenant du metal (5) avec la formation, sur la surface de contact, d'un ensemble d'aspérités de relief, réparties avec une densité surfacique de 50 à 1000 pièces/mm$^2$, présentant les contours profilés de protuberances (1) et de creux (2) ayant une dimension en section transversale de 20 à 100 $\mu$m, les parois de la plupart desdites protuberances (1) et desdits creux (2) étant orientées selon un angle de 45 à 90° par rapport à ladite surface de contact ; l'application d'un matériau polymère (4) à l'état partiellement fondu sur la surface préparée, avec une épaisseur d'au moins 10 $\mu$m, lequel pénètre dans les aspérités de relief, les recouvre extérieurement et, en raison de sa fluidité, occupe et enveloppe les volumes libres des protuberances (1) et des creux (2) préparés ; le procédé assurant la dissipation de chaleur à partir de la jonction de l'unité combinée produite et réduisant l'ampleur de la dilatation thermique de l'unité, et, en cas de force mécanique externe, assurant l'apparition de contre-forces qui empêchent la séparation ou le déplacement des parties liées de l'unité, **caractérisé en ce que** les protubérances (1) et les creux (2) sont réalisés sous forme de cratères dont les bords s'élèvent au-dessus de la surface de contact et comportent des passages ménagés en profondeur dans leurs parties centrales, dans lequel les protubérances (1) et les creux (2) d'un ensemble d'aspérités de relief sont formés sur la surface de contact de manière ordonnée sous forme de rangées successives, la distance entre celles-ci dépassant la dimension en section transversale de la plus grande protubérance et du plus grand creux du substrat contenant du métal (5) d'au plus 1,5 fois, et dans lequel des mesures ultérieures de contrôle et de diagnostic des paramètres géométriques dudit ensemble d'aspérités de relief sont effectuées après la préparation locale préalable d'un substrat contenant du métal (5).

2. Procédé de liaison d'un matériau polymère et d'un substrat contenant du métal selon la revendication 1, **caractérisé en ce que** la préparation du substrat contenant du métal (5) est effectuée mécaniquement.

3. Procédé de liaison d'un matériau polymère et d'un substrat contenant du métal selon la revendication 2, **caractérisé en ce que** la préparation mécanique comprend le perçage ou la découpe ou l'usinage électrochimique ou l'usinage par décharge électrique ou le soudage à l'arc électrique ou au plasma ou par faisceau d'électrons.

4. Procédé de liaison d'un matériau polymère et d'un substrat contenant du métal selon la revendication 1, **caractérisé en ce qu'**avant la liaison avec le matériau polymère (4), des préimprégnés ou des charges inertes sont appliqués aux creux (2) des aspérités de relief du substrat afin de minimiser le volume des cavités d'air.

Fig. 1a/8                    Fig. 1b/8

Fig. 1c/8

Fig. 2/8

Fig. 3a/8

Fig. 3b/8

Fig. 4a/8

Fig. 4b/8

Fig. 5a/8

Fig. 5b/8

Fig. 6/8

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 112021006205 T5
- RU 2759274 C1
- EP 3943278 A1
- US 2021283860 A1
- US 2019001441 A1